# EUROPEAN PATENT APPLICATION

(11) **EP 1 610 565 A1**
(43) Date of publication of application: **28.12.2005**
(21) Application number: 04014964.3
(22) Date of filing: 25.06.2004
(51) Int. Cl.: H04N 9/31, G02B 27/14, G02B 27/28

(54) **Projector arrangement**

(71) Applicant: Sony Deutschland GmbH, 50829 Köln (DE)
(72) Inventor: Facius, Zoltan c/o Stuttgart Technology Center, Hedelfinger Strasse 61 70327 Stuttgart (DE); Kamm, Markus c/o Stuttgart Technology Center, Hedelfinger Strasse 61 70327 Stuttgart (DE)
(74) Representative: Müller - Hoffmann & Partner

(57) **Abstract**

The present invention relates to a projector arrangement (10) wherein a spectral splitting and recombination unit (SSR) comprises a first and a second polarization selective or polarizing beam splitting device (11, PBSI; 12, PBS2) and a wavelength selective optical element (WSOE) which are sufficient to realize the main and/or the entire functionality of said spectral splitting and recombination unit (SSR).

## Description

The present invention relates to a projector arrangement.

More particular, the present invention relates to a projector arrangement having a compact illumination and beam splitting part which uses three reflective display panels and only two beam splitting devices or cubes.

Today, most projector arrangements or projection systems comprise the so-called three panel arrangement which uses three image generating or generation means, units, or devices. In general, primary illumination light, for instance white light is generated and split up in order to generate three spectrally different components which are used to illuminate the image generation units or devices for generating partial images to be superposed in order to finally obtain an image to be displayed.

A major difficulty in the progress of building compact projector arrangements is the necessity of a certain number of optical elements in order to split up the provided primary illumination light, to generate the partial images and to recombine the generated partial images in order to finally obtain the image to be displayed as a superposition of said partial images.

It is an object of the present invention to provide a projector arrangement which has reliable functionalities at a reduced space comsumption and with a reduced number of optical elements.

The object is achieved according to the present invention with a projector arrangement according to the features of independent claim 1. Preferred embodiments of the inventive projector arrangement are within the scope of the dependent subclaims.

According to the present invention the projector arrangement comprises first, second, and third image generation or generating means, units or devices which are adapted and/or arranged in order to generate a first, a second, and a third partial image, respectively, of an image to be displayed. According to the present invention the projector arrangement further comprises a spectral splitting and recombination unit as well as an optical projection unit.

According to the present invention said spectral splitting and recombination unit is adapted and/or arranged in order to receive primary illumination light.

Said spectral splitting and recombination unit comprises a first and a second polarization selective or polarizing beam splitting device.

Said spectral splitting and recombination unit and in particular said first polarization selective or polarizing beam splitting device are adapted and/or arranged in order to receive said primary illumination light or first, second, and third primary illumination light components thereof through a single and common face of said first polarization selective or polarizing beam splitting device and in particular through a first face thereof. This is done to achieve compactness.

Additionally a wavelength selective optical element is provided between said first polarization selective or polarizing beam splitting device and said second polarization selective or polarizing beam splitting device and in particular between a second surface of said first polarization selective or polarizing beam splitting device and a first surface of said second polarization selective or polarizing beam splitting device and/or in an connected optical path between these entities.

According to the present invention said wavelength selective optical element is adapted and/or arranged:
- in order to receive said first primary illumination light component (L1r) - in particular in a first or s-polarized polarization state - or a derivative thereof and to essentially reflect said first primary illumination light component (L1r) - in particular thereby changing said first or s-polarized polarization state into a second or p-polarized polarization state, and/or
- in order to receive said second primary illumination light component (L1g) - in particular in said first or s-polarized polarization state - or a derivative thereof and to essentially transmit said second primary illumination light component (L1g) - in particular thereby changing said first or s-polarized polarization state into said second or p-polarized polarization state, and/or
- in order to receive said third primary illumination light component (Llb) - in particular in said first or s-polarized polarization state - or a derivative thereof and to essentially transmit said third primary illumination light component (L1b) - in particular thereby leaving said first or s-polarized polarization state unchanged.

It is a further aspect of the present invention that the main and/or the entire functionality of said spectral splitting and recombination unit (SSR) is essentially completely realized by said first, said second polarization selective or polarizing beam splitting device and said wavelength selective optical element.

According to the present invention said spectral splitting and recombination unit comprises a first and a second polarization selective or polarizing beam splitting device and a wavelength selective optical element there between. Additionally, according to the present invention it is provided, that the main and/or the entire functionality of said spectral splitting and recombination unit is essentially completely realized by said first and said second polarization selective or polarizing beam splitting devices and by said wavelength selective optical element.

It is therefore a key idea of the present invention to have a projector arrangement wherein the spectral splitting and recombination unit essentially uses only a first and a second polarization selective or polarizing beam splitting device and a wavelength selective optical element in order to essentially realize the main and/or the entire functionality of said spectral splitting and recombination unit.

This is in contrast to prior art systems where a larger number of polarization selective or polarizing beam splitting devices or units is necessary in order to realize the main and/or the entire functionality of prior art spectral splitting and recombination units. Therefore, the present invention avoids increasing the number of optical elements and in particular the number of necessary polarization selective or polarizing beam splitting devices without decreasing or degrading the reliability and image's quality of a projector arrangement.

According to a preferred embodiment of the inventive projector arrangement said wavelength selective optical element comprises a first quarter wave layer, a dichroic layer, a second quarter wave layer, and/or a wavelength dependent retarder layer in particular in this order from first polarization selective or polarizing beam splitting device to said second polarization selective or polarizing beam splitting device and/or on the basis of an underlying transparent substrate.

Preferably, the spectral splitting and recombination unit is adapted and/or arranged in order to realize the following functionalities:
- to receive primary illumination light in particular comprising first, second, and third - in particular essentially spectrally disjunct and/or complemental - spectral primary illumination light components,
- to spectrally split said primary illumination light into its first, second, and third spectral primary illumination light components which are in particular essentially spectrally disjunct, non-overlapping and/or spectrally complemental and/or into derivatives thereof which serve as secondary illumination light components, in particular for said first, second, and third partial images to be generated,
- to direct said first, second, and third secondary illumination light components to said first, second, and third image generation means,
- to receive light from said first, second, and third image generation means of said generated first, second, and third partial images generated by said first, second, and third image generation means, respectively, in particular as said first, second, and third tertiary illumination light components, and
- to at least partly recombine and direct said first, second, and third tertiary illumination light components to said optical projection unit.

According to a further embodiment of the present invention the optical projection unit is adapted and / or arranged to realize the following functionalities:
- to receive said first, second, and third tertiary illumination light components and/or a derivative or combination thereof from said spectral splitting and recombination unit, and
- to output and project said first, second, and third tertiary illumination light components and/or a derivative or combination thereof to thereby image and project a combination or superposition of said first, second, and third partial images as said image to be displayed.

According to a preferred embodiment of the inventive projector arrangement said first polarization selective or polarizing beam splitting device is adapted and/or arranged for receiving said primary illumination light, its first, second, and third spectral primary illumination light components and/or a derivative thereof, in particular in a first or s-polarized polarization state. According to this measure, the first polarization selective or polarizing beam splitting device provides a light entrance area or section for the primary illumination light.

According to a further preferred embodiment of the present invention said first polarization selective or polarizing beam splitting device comprises a first surface which is adapted and/or arranged for having said primary illumination light, its first, second, and third spectral primary illumination light components and/or a derivative thereof - in particular of said first or s-polarized polarization state - entered said first polarization selective or polarizing beam splitting device. According to this measure, said first surface of said first polarization selective or polarizing beam splitting device acts or serves as said light entrance area or section for the primary illumination light.

According to a further alternative of the present invention, said first polarization selective or polarizing beam splitting device comprises a second surface, which is adapted and/or arranged for having said primary illumination light, its first, second, and third spectral primary illumination light components and/or a derivative thereof - in particular of said first or s-polarized polarization state - left said first polarization selective or polarizing beam splitting device. This in particular may realize to have said primary illumination light, its first, second, and third spectral primary illumination light components and/or a derivative thereof interact with a provided wavelength selective optical element.

According to a further preferred embodiment of the present invention the inventive projector arrangement additionally is adapted in a way that said second surface of said first polarization selective or polarizing beam splitting device is adapted and/or arranged for having said first spectral primary illumination light component of said primary illumination light and/or a derivative thereof - in particular in a second or p-polarized polarization state - re-entered said first polarization selective or polarizing beam splitting device as a first secondary illumination light component and as light for said first partial image to be generated in particular after interaction with said provided wavelength selective optical element.

According to a further preferred embodiment of the present invention said first polarization selective or polarizing beam splitting device comprises a third surface which is adapted and/or arranged for having said first secondary illumination light component and/or a derivative thereof - in particular in a second or p-polarized polarization state - left said first polarization selective or polarizing beam splitting device as light for said first partial image in particular to have said first secondary illumination light component and/or a derivative thereof interact with said first image generation means for said first partial image in order to generate said first partial image and said first tertiary illumination light component as light of said first partial image in particular in said first or s-polarized polarization state.

According to a further alternative or additional embodiment of the present invention said first polarization selective or polarizing beam splitting device comprises a fourth surface which is adapted and/or arranged for having said first tertiary illumination light component as light of said first partial image and/or a derivative thereof - in particular of said first or s-polarized polarization state - left said first polarization selective or polarizing beam splitting device in particular to direct said first tertiary illumination light component as light of said first partial image to said optical projection unit .

According to a further alternative or additional embodiment of the present invention said first polarization selective or polarizing beam splitting device comprises a polarization selecting or selective interface which is adapted and/or arranged to essentially reflect light of said first or s-polarized polarization state and to essentially transmit light of said second or p-polarized polarization state.

According to this embodiment it may be of further advantage if said polarization selecting or selective interface of said first polarization selective or polarizing beam splitting device is adapted and/or arranged in order to essentially reflect and redirect said primary illumination light, its first, second, and third spectral primary illumination light components and/or a derivative thereof - in particular of said first or s-polarized polarization state - from said first surface of said first polarization selective or polarizing beam splitting device to said second surface of said first polarization selective or polarizing beam splitting device.

According to a further preferred embodiment of the present invention said polarization selecting or selective interface of said first polarization selective or polarizing beam splitting device is adapted and/or arranged in order to essentially transmit said first secondary illumination light component of secondary illumination light and/or said derivative as light for said first partial image - in particular of said second or p-polarized polarization state - from said second surface of said first polarization selective or polarizing beam splitting device to said third surface of said first polarization selective or polarizing beam splitting device.

Further additionally or alternatively, said polarization selecting or selective interface of said first polarization selective or polarizing beam splitting device is adapted and/or arranged in order to essentially reflect said first tertiary illumination light component of tertiary illumination light as light of said first partial image - in particular of said first or s-polarized polarization state - from said third surface of said first polarization selective or polarizing beam splitting device to said fourth surface of said first polarization selective or polarizing beam splitting device.

Additionally or alternatively, said second polarization selective or polarizing beam splitting device is adapted and/or arranged for receiving said second and third primary illumination light components of said primary illumination light, said second and third secondary illumination light components of said secondary illumination light and/or a derivative thereof as light for said second and said third partial images to be generated - in particular in said second or p-polarized polarization state or in said first or s-polarized polarization state, respectively - from said first polarization selective or polarizing beam splitting device, from the second surface thereof and/or from said provided wavelength selective optical element in particular after interaction with said provided wavelength selective optical element.

In a similar manner as regarding the first polarization selective or polarizing beam splitting device the second polarization selective or polarizing beam splitting device may comprise first to fourth surfaces as well as a polarization selecting interface, too.

According to a further preferred embodiment of the present invention said second polarization selective or polarizing beam splitting device comprises a first surface which is adapted and/or arranged for having said second and third primary illumination light components of said primary illumination light, said second and third secondary illumination light components of said secondary illumination light and/or a derivative thereof - in particular in said second or p-polarized polarization state or in said first or s-polarized polarization state, respectively - entered said first polarization selective or polarizing beam splitting device as light for said second and said third partial images, respectively, to be generated - in particular from said first polarization selective or polarizing beam splitting device, from said second surface thereof and/or from said provided wavelength selective optical element in particular after interaction with said provided wavelength selective optical element.

Additionally or alternatively, said second polarization selective or polarizing beam splitting device comprises a second surface which is adapted and/or arranged for having said second primary illumination light component of said primary illumination light, said second secondary illumination light component of said secondary illumination light and/or a derivative thereof - in particular in said second or p-polarized polarization state - left said second polarization selective or polarizing beam splitting device as light for said second partial image to be generated and in particular to have said second primary illumination light component of said primary illumination light, said second secondary illumination light component of said secondary illumination light and/or a derivative thereof interact with said second image generating means for said second partial image in order to generate said second partial image and said second tertiary illumination light component of tertiary illumination light as light of said second partial image in particular in said first or s-polarized polarization state.

According to a further advantageous embodiment of the present invention said second surface of said second polarization selective or polarizing beam splitting device is adapted and/or arranged for having said second tertiary illumination light component of tertiary illumination light and/or a derivative thereof - in particular in said first or s-polarized polarization state - re-entered said second polarization selective or polarizing beam splitting device as light of said second partial image.

According to a further advantageous embodiment of the present invention said second polarization selective or polarizing beam splitting device comprises a third surface which is adapted and/or arranged for having said third primary illumination light component of said primary illumination light, said third secondary illumination light component of said secondary illumination light and/or a derivative thereof - in particular in said first or s-polarized polarization state - left said second polarization selective or polarizing beam splitting device as light for said third partial image to be generated in particular to have said third primary illumination light component of said primary illumination light, said third secondary illumination light component of said secondary illumination light and/or a derivative thereof interact with said third image generating means for said third partial image in order to generate said third partial image and said third tertiary illumination light component of tertiary illumination light as light of said third partial image in particular in said second or p-polarized polarization state.

Additionally or alternatively, said third surface of said second polarization selective or polarizing beam splitting device is adapted and/or arranged for having said third tertiary illumination light component of tertiary illumination light and/or a derivative thereof - in particular in said second or p-polarized polarization state - re-entered said second polarization selective or polarizing beam splitting device as light of said third partial image.

As a further alternative or additional embodiment said second polarization selective or polarizing beam splitting device comprises a fourth surface which is adapted and/or arranged:
- for having said second tertiary illumination light component of tertiary illumination light as light of said second partial image - in particular of said first or s-polarized polarization state - left said second polarization selective or polarizing beam splitting device in particular to direct said second tertiary illumination light component of tertiary illumination light as light of said second partial image to said optical projection unit, and/or
- for having said third tertiary illumination light component of tertiary illumination light as light of said third partial image - in particular of said second or p-polarized polarization state - left said second polarization selective or polarizing beam splitting device in particular to direct said third tertiary illumination light component of tertiary illumination light as light of said third partial image to said optical projection unit.

According a further preferred embodiment of the present invention in the inventive projector arrangement said second polarization selective or polarizing beam splitting device also comprises a polarization selecting or selective interface which is adapted and/or arranged to essentially reflect light of said first or s-polarized polarization state and to essentially transmit light of said second or p-polarized polarization state.

It is of further advantage to have said polarization selecting or selective interface of said second polarization selective or polarizing beam splitting device being adapted and/or arranged in order to essentially reflect and redirect said third primary illumination light component of said primary illumination light, said third secondary illumination light component of said secondary illumination light and/or a derivative thereof - in particular in said first or s-polarized polarization state - as light for said third partial image to be generated from said first surface of said second polarization selective or polarizing beam splitting device to said third surface of said second polarization selective or polarizing beam splitting device and/or in order to essentially reflect and redirect said second tertiary illumination light component of said tertiary illumination light and/or a derivative thereof - in particular in said first or s-polarized polarization state - as light of said second partial image generated from said second surface of said second polarization selective or polarizing beam splitting device to said fourth surface of said second polarization selective or polarizing beam splitting device.

Additionally or alternatively, according to the present invention in said inventive projector arrangement said polarization selecting or selective interface of said second polarization selective or polarizing beam splitting device is adapted and / or arranged in order to essentially transmit said third tertiary illumination light component of said tertiary illumination light and/or a derivative thereof - in particular in said second or p-polarized polarization state - as light of said third partial image generated from said third surface of said second polarization selective or polarizing beam splitting device to said fourth surface of said second polarization selective or polarizing beam splitting device and/or in order to essentially transmit said second primary illumination light component of said primary illumination light, said second secondary illumination light component of said secondary illumination light and/or a derivative thereof - in particular in said second or p-polarized polarization state - as light for said second partial image to be generated from said first surface of said second polarization selective or polarizing beam splitting device to said second surface of said second polarization selective or polarizing beam splitting device.

It is of further advantage to have in accordance to a further preferred additional or alternative embodiment said first polarization selective or polarizing beam splitting device and said second polarization selective or polarizing beam splitting device adapted and/or arranged in order to have said second surface of said first polarization selective or polarizing beam splitting device and said first of said second polarization selective or polarizing beam splitting device essentially facing each other and/or in the vicinity to each other and/or to have a connected optical path between them.

Further additionally or alternatively, between said first polarization selective or polarizing beam splitting device and said second polarization selective or polarizing beam splitting device, and in particular between said second surface of said first polarization selective or polarizing beam splitting device and said first surface of said second polarization selective or polarizing beam splitting device and/or in an connected optical path between these entities may be provided a wavelength selective optical element.

A projector arrangement according to a still further embodiment of the present invention is proposed, wherein said spectral splitting and recombination unit comprises a wavelength selective polarizer which is adapted and/or arranged adjacent or in the vicinity of said fourth surface of said second polarization selective or polarizing beam splitting device:
- in order to transmit said third tertiary illumination light component in said second or p polarized polarization state,
- in order to transmit said second tertiary illumination light component in said first or s polarized polarization state, and
- in order to block, reflect and/or absorb said off-light or waste light component in said second or p polarized polarization state.

A projector arrangement according to a still further embodiment of the present invention is proposed, wherein said spectral splitting and recombination unit comprises an analyser, which is adapted and/or arranged adjacent or in the vicinity of said fourth surface of said first polarization selective or polarizing beam splitting device:
- in order to transmit said first tertiary illumination light component in said first or s polarized polarization state and
- in order to block, reflect and/or absorb said off-light or waste light component in said second or p polarized polarization state.

These and further aspects of the present invention will be elucidated in more detail by taking reference to the following remarks:

### Summary

The invention inter alia describes the optical engine of a projection system using three reflective display panels and only two beam splitter cubes.

The described optical engine has an outstanding compact illumination- and beam-splitter-part. It has an advantageous short back focal length, but uses either two projection lenses or a special "double to one" folded projection lens.

### Background and Problem

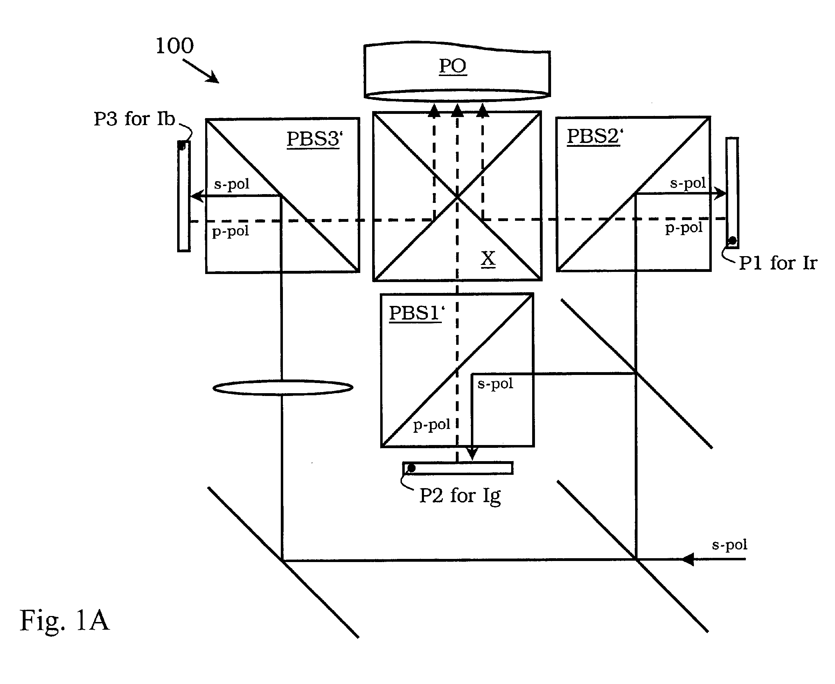

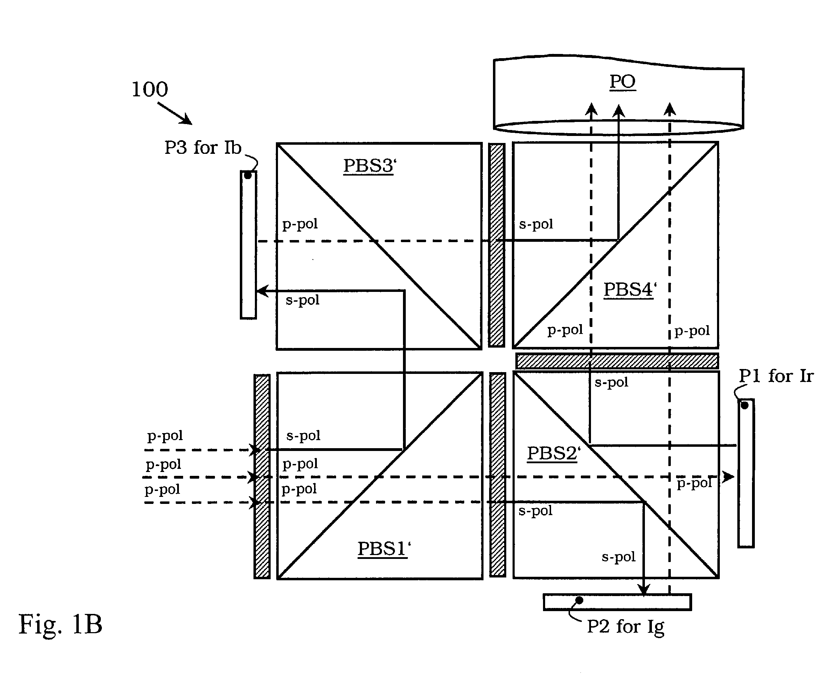

Today's three panel projection systems have the drawback of bulky beam splitter units. The white light is first split by many dichroic mirrors, folding mirrors or polarizing beam-splitters into the primary colors red, green and blue and after being reflected or transmitted by the panels, the light again is recombined by several prism cubes before it is projected by a common projection lens. In the case of reflective panels, this results in a long back-focal length BFL (= distance between the panels and the first surface of the projection lens). A long BFL complicates the design of the projection lens. Figure 1a and 1b show two commonly used architectures of optical engines with three reflective panels. In Figure la, the so called "3PBS architecture", light is split by dichroic mirrors and folding mirrors and is recombined by an X-cube. In Figure 1b, the so-called "ColorQuad" architecture, the light is split and recombined by four polarizing beam-splitters together with wavelength-selective retarders.

### Aspect of the invention

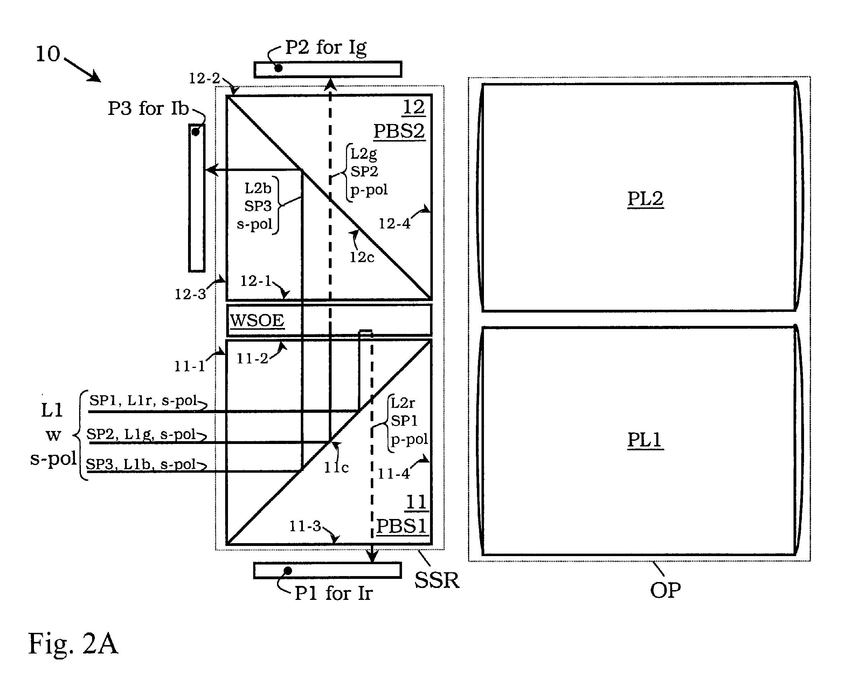

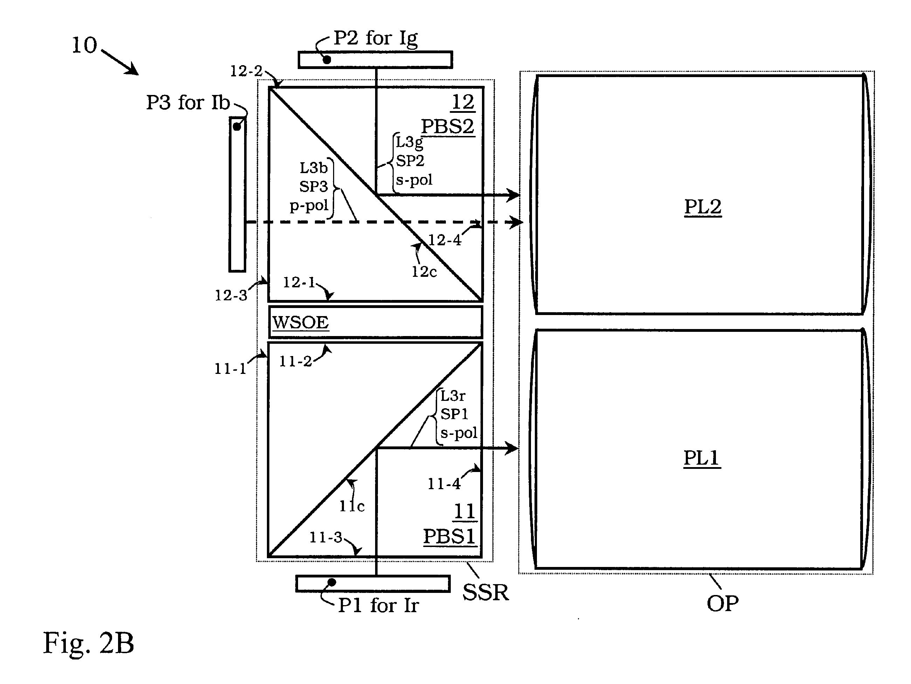

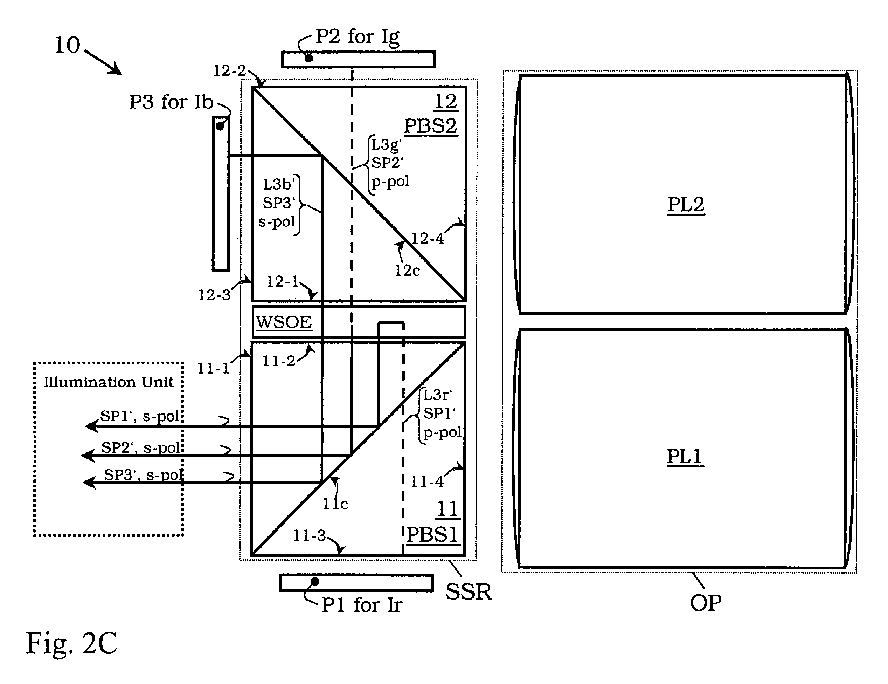

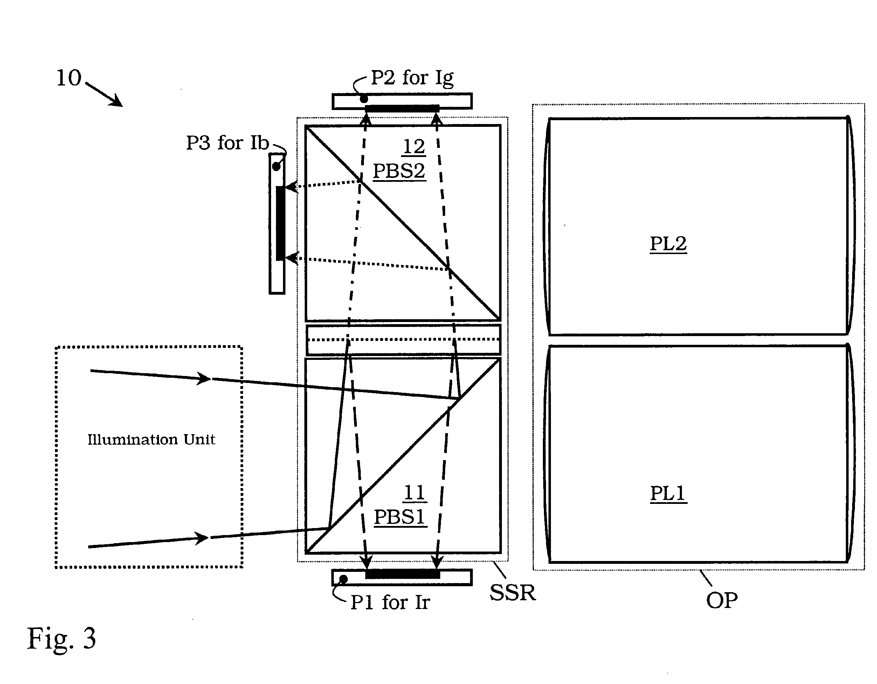

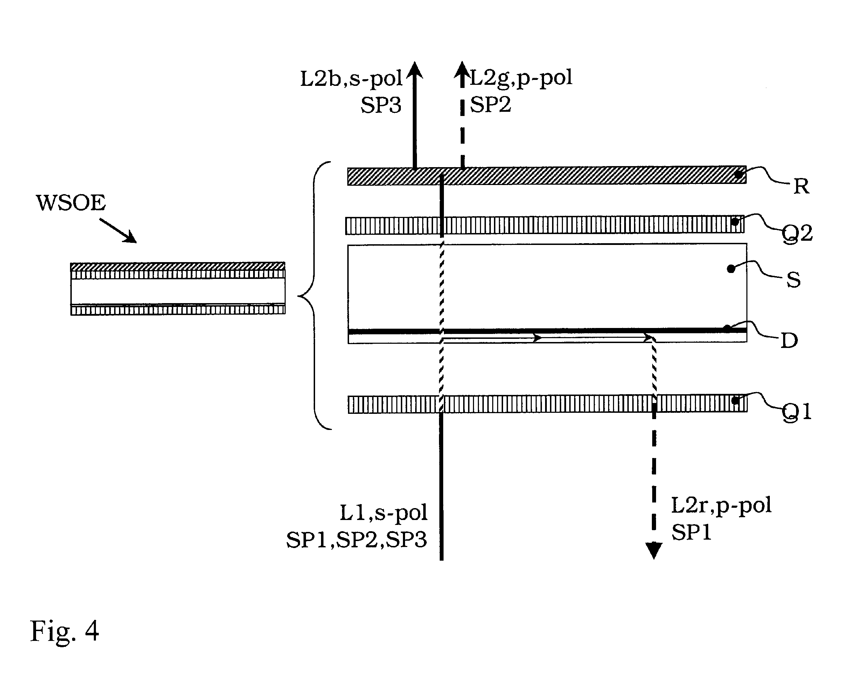

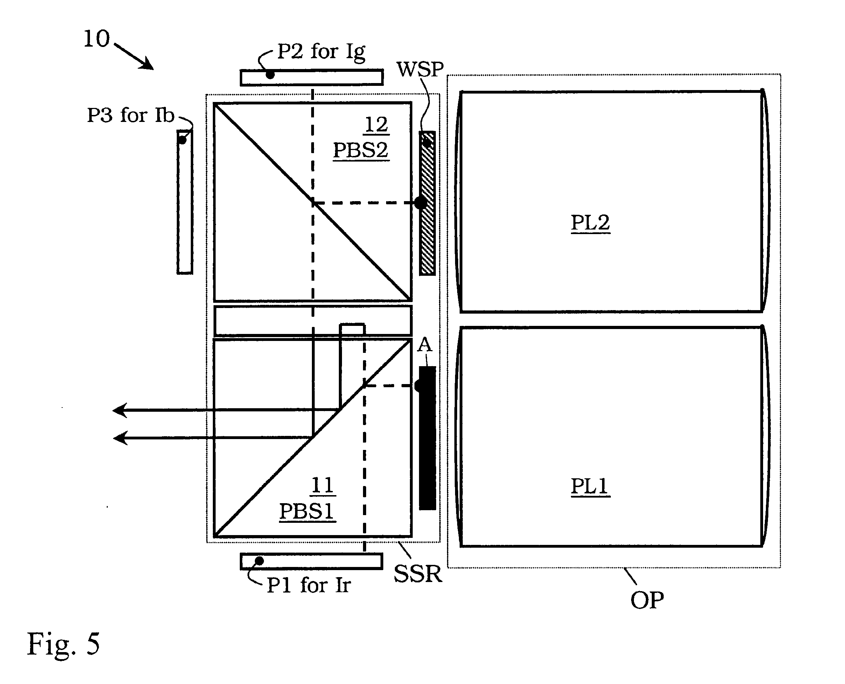

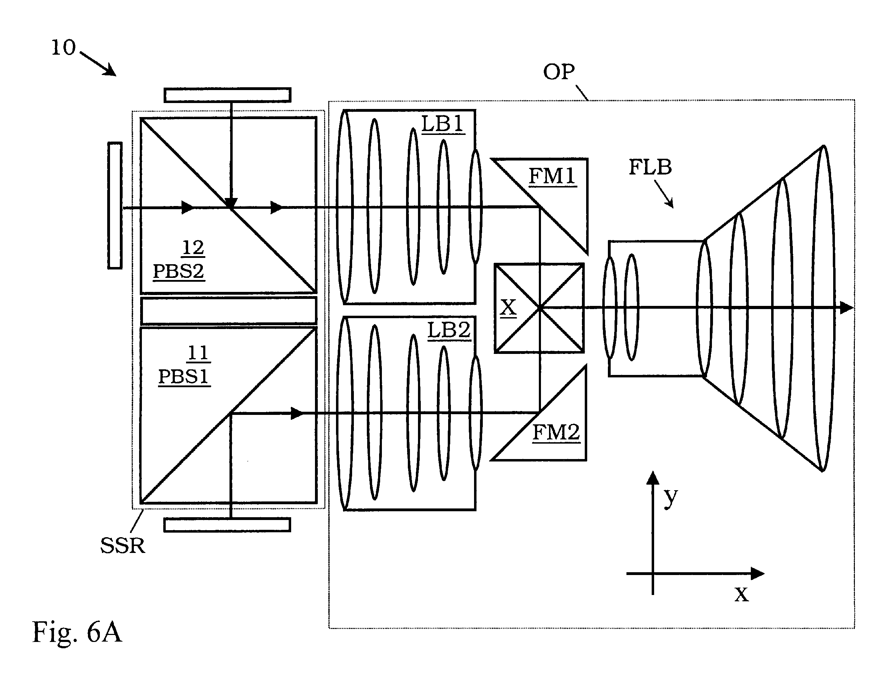

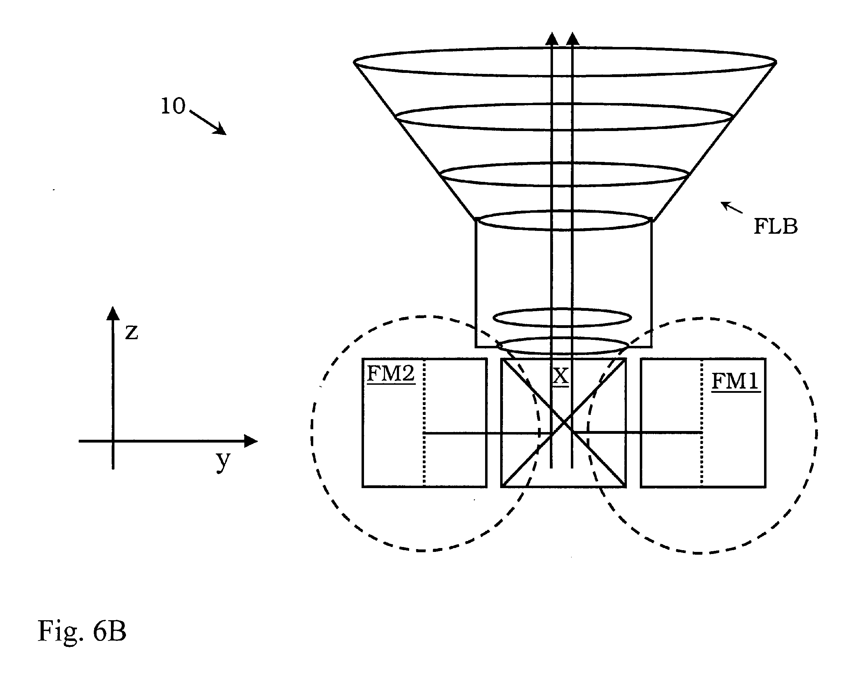

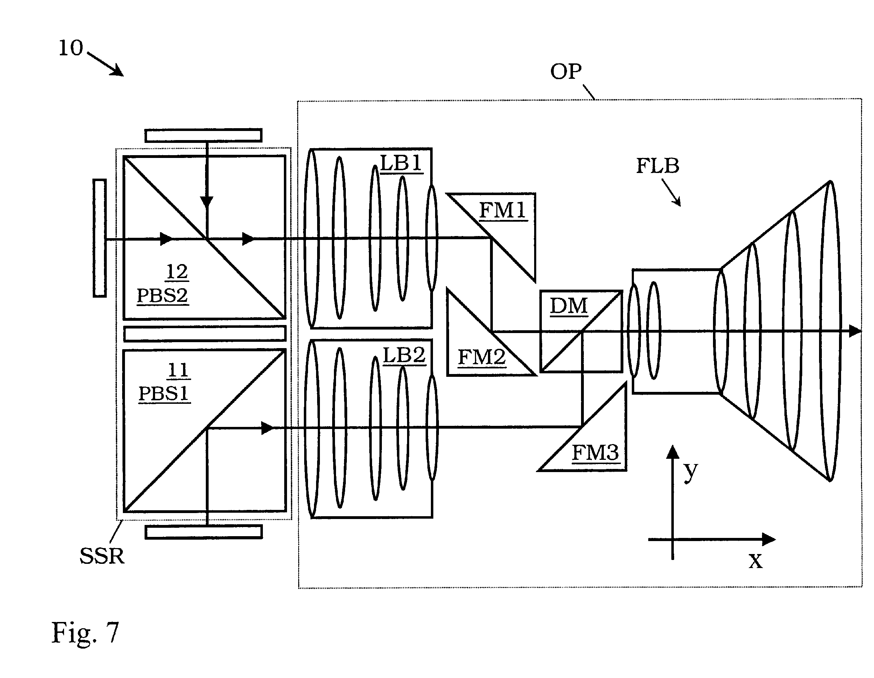

A Figure 2A shows a basic architecture according to the present invention. It consists of two polarizing beam-splitters PBS1 and PBS2, one wavelength selective optical element WSOE, three display panels P1, P2, P3 and two projection lenses PL1 and PL2 building the optical projection unit OP. The WSOE is placed between the polarizing beam splitters PBS1 and PBS2. One panel is attached to PBS1 and two panels are attached to PBS2. Projection lens PL1 is attached to PBS 1 and PL2 is attached to PBS2.
   White and s-polarized primary illumination light L1, w is entering the polarizing beam-splitter PBS1 and is reflected by the polarizing beam-splitter coating in direction of the wavelength selective optical element WSOE. One spectral part SP1 of the white light beam L1, w is reflected back by the WSOE thereby changing its polarization state from s- to p-polarization. The p-polarized spectral part SP1 is now transmitting the PBS1 and is entering the display panel P1. The spectral parts SP2 and SP3, which are completely or partly distinct to each other and to SP1, are transmitting the WSOE, thereby changing the polarization state of the spectral part SP2 from s- to p-polarization. The transmitted and still s-polarized spectral part SP3 is reflected by the beam splitter coating of PBS2 and is entering the display panel P3. The p-polarized spectral part SP2 is passing the beam splitter coating of PBS2 and is entering the display panel P2.
   In the ON state the polarization states of the spectral parts SP1 and SP2 are changed from p- to s-polarization and the polarization state of the spectral part SP3 is changed from s- to p-polarization after being reflected by the display panels P1, P2 and P3 respectively: see Fig. 2B. Now the s-polarized spectral part SP1 is reflected by the beam-splitter coating of PBS1 and is entering projection lens PL1. The s-polarized spectral part SP2 is reflected by the beam-splitter coating of PBS2 and is entering projection lens PL2. The p-polarized spectral part SP3 is passing PBS2 and is entering projection lens PL2.
   In the OFF state the polarization state of the spectral parts SP1 and SP2 remains p-polarized and the polarization state of the spectral part SP3 remains s-polarized after being reflected by the display panels P1, P2 and P3 respectively. All spectral parts SP1, SP2 and SP3 are now redirected in direction of the illumination unit: see Fig. 2C.
B A common illumination optical unit may be attached to PBS1, as shown in Fig. 3. White light L1, w is emerging from this illumination unit and is entering PBS1. The illumination optical unit is adapted to focus the illuminating light beam to the panels P1, P2, P3. The wavelength selective optical element WSOE is placed between PBS1 and PBS2 in such a way that the optical distance of spectral part SP1 to panel P1 is same like the distance of spectral parts SP2 and SP3 to the panels P2 and P3 respective.
C The wavelength selective optical element WSOE comprises two quarter wave layers Q1 and Q2, a dichroic layer D on a transparent substrate S, e.g. glass and a wavelength dependent retarder R as shown in Fig. 4.
   Linear s polarized white light entering the WSOE is passing the first quarter-wave layer, thereby turning the polarization state from linear to circular. Next the light beam hits the dichroic layer D, thereby reflecting spectral part SP1 and changing the chirality of the circular polarized light, e.g. from left circular to right circular. The reflected back spectral part SP1 next passes again the first quarter-wave layer, thereby turning the polarization state to linear p.
   The transmitted spectral parts SP2 and SP3 are next passing the second quarter wave layer Q2, thereby turning the polarization state from circular to linear. By passing the wavelength selective retarder R the polarization state of spectral part SP2 is turned from s-polarized to p-polarized or - alternatively the polarization state of spectral part SP3 is turned from p-polarized to s-polarized.
D Light of spectral part SP2 is reflected in p-polarized mode from the display panel P2 when the panel is in the OFF state as shown in Fig. 5. Ideally, all of the p-polarized light is passing the PBS2 in direction to PBS1. But, as a general attribute of polarizing beam-splitters, about 10% of the p-polarized light is reflected at the polarizing beam-splitter coating. Therefore - even in the OFF (=black) state - about 10% of the light would enter the projection lens, resulting in a worse contrast.
   To overcome this loss in contrast, an additional clean-up polarizer in front of the projection lens PL2 is required to block the leaking p-polarized light. This clean-up has to be a wavelength selective polarizer WSP, because only p-polarized light of spectral part SP2 must be blocked. The p-polarized light of spectral part SP3, which comes from display panel P3 in the ON state, must be transmitted by the WSP.
E The wavelength selective polarizer WSP mentioned in section D can be of following types:
   - Cholesteric polarizer (CF) with adapted quarter-wave layers. This CF reflects the leaking p-polarized light of spectral part SP2, but lets through spectral part SP3 and all s-polarized light of spectral part SP2.
   - Colour selective retarder, which turns the polarization state of spectral part SP2 from p polarized to s polarized and from s polarized to p polarized and leaves the polarization state of spectral part SP3 as it is. An additional absorbing polarizer then absorbs all s-polarized light.
   - An absorptive wavelength selective polarizer which is adapted in such way that p-polarized light of spectral part SP2 is absorbed, but p-polarized light of spectral part SP3 and s-polarized light from SP2 is transmitted.
F Light of spectral part SP1 is reflected in p-polarized mode from display panel P1 when the panel is in the OFF state as shown in Fig. 5. Ideally, all of the p-polarized light is passing the PBS1 in direction to PBS2. But, as a general attribute of polarizing beam splitters, about 10% of the p-polarized light is reflected at the polarizing beam splitter coating. Therefore - even in the OFF (=black) state - about 10% of the light would enter the projection lens, resulting in a worse contrast.
   To overcome this loss in contrast, an additional clean-up polarizer or analyser A in front of the projection lens PL1 is required to block the leaking p-polarized light. In contrast to section D this clean-up polarizer A can be of standard type, as only light in the spectral part SP1 is influenced.
G In reality the diameter of the projection lenses PL1 and PL2 exceed the diameter of the polarizing beam-splitter cubes PBS1 and PBS2. As a result, the distance between PBS1 and PBS2 must be large enough to fit to both projection lenses PL1 and PL2. Especially rear projection lenses have front lenses with a large diameter.
   To overcome this space requirement the projection lenses could be split in two separate first lens blocks LB1 and LB2 attached to PBS1 and PBS2, respectively, and a common second or front lens block FLB as shown in Fig. 6A. Folding mirrors FM1, FM2 combine the two separate light paths coming from the first lens blocks LB1 and LB2 into the common front lens block FLB. An X prism X combines the light coming from lens block LB1 with light coming from lens block LB2. The X prism X has two different dichroic coatings. One coating is to reflect the light of spectral part SP1 and the other to reflect the light of spectral parts SP2 and SP3 into the common front lens block FLB.
H Alternatively, the X prism X can be rotated by 90° in order to fold the common light path together with the front lens block FLB out of the plane as shown in Fig. 6B. This has the advantage of small footprint and adapts the engine to be used in rear projection cubes.
I Instead of using an X prism X to recombine the two light paths into one an arrangement according to Fig. 7 can be used. It comprises three folding mirrors FM1. FM2, FM3 and one dichroic mirror prism DM to recombine the two light paths.

### Possible Aspects

Existing projection systems with three reflective display panels are using three to four beam splitter cubes and need a long back-focal length of the projection lens. The invention describes a projection system with outstanding compact illumination and beam splitter part using only two beam-splitter cubes. The projection lens or lenses has/have a short back focal length.
- **Figs. 1A, B**: are schematical block diagrams of prior art projector arrangements.
- **Figs. 2A - C**: are schematical block diagrams elucidating a first embodiment of the inventive projector arrangement.
- **Figs. 3 - 7**: demonstrate by means of schematical block diagrams aspects of further embodiments of the inventive projector arrangement.

In the following similar elements and structures with respect to their functionality and construction are denoted by the same reference symbols. A detailed description is not repeated in each case of their occurrence.

As already indicated above, prior art projector arrangements 100 as shown in Figs. 1A and 1B possess a comparable large number of optical elements and they are therefore more complicated as introduced by the present invention, as can be obtained by the schematical block diagrams of Figs. 1A und 1B.

Figs. 2A to 2C demonstrate by means of schematical block diagrams the basic structure of an embodiment of the inventive projector arrangement 10 with respect to three operational states.

The embodiment of the inventive projector arrangement 10 as shown in Fig. 2A to 2C comprises a spectral splitting and recombination unit SSR and an optical projection unit OP as basic constituents. Additionally, first, second, and third image generating/generation means/devices or units P1, P2, and P3 are provided, which are adapted and assigned for generating first to third partial images Ir, Ig, Ib of an image I to be displayed.

The spectral splitting and recombination unit SSR comprises a first polarization selective or polarizing beam splitting device PS1, 11 and a second polarization selective or polarizing beam splitting device PS2, 12. Said first and said second polarization selective or polarizing beam splitting devices PBS1, 11; PBS2, 12 may be built by so called beam splitting cubes, or the like. Said first polarization selective or polarizing beam splitting device PBS1, 11 comprises a first, a second, a third, and a fourth surface 11-1, 11-2, 11-3, and 11-4, respectively. Additionally, a polarization selecting or selective interface 11c is provided.

In a similar manner said second polarization selective or polarizing beam splitting device PBS2, 12 comprises a first, a second, a third, and a fourth surface 12-1, 12-2, 12-3, and 12-4, respectively, as well as a polarization selective/selecting interface 12c.

The first surface 11-1 of said first polarization selective or polarizing beam splitting device PBS1, 11 serves as a light entrance for the spectral splitting and recombination unit SSR and therefore for the inventive projector arrangement 10. White light w - here having a s-polarized polarization state and being constituted by first to third spectrally separated, non-overlapping and complementary primary illumination light components L1r, L1g, L1b; SP1, SP2, SP3, respectively - enters as primary illumination light L1 said first surface 11-1 as said light entrance section or portion. Because of its s-polarized polarization state said primary illumination light L1, and in particular its first to third primary illumination light components L1r, L1g, L1b; SP1, SP2, SP3 are reflected from said first surfaces 11-1 by said polarization selective interface 11c to said second surface 11-2 of said first polarization selective or polarizing beam splitting device PBS1, 11 and thereby leave said first polarization selective or polarizing beam splitting device PBS1, 11 in order to interact the wavelength selective optical element WSOE, which is provided between said second surface 11-2 of said first polarization selective or polarizing beam splitting device PBS1, 11 and the first surface 12-1 of said second polarization selective or polarizing beam splitting device PBS2, 12 or in an optical path between these surfaces.

Upon interaction the first to third primary illumination light components L1r, L1g, L1b; SP1, SP2, SP3 which may be referred to as secondary illumination light components L2r, L2g, and L2b, respectively, of secondary illumination light L2 as light for said partial images Ir, Ig, and Ib, respectively, to be generated, primary illumination light L is split up into its distinct spectral components. The first secondary illumination light component L2r stems from the first primary illumination light component L1r, SP1 and is reflected by the interaction of the wavelength selective optical element WSOE and thereby obtains a p-polarized polarization state and re-enters the first polarization selective or polarized beam splitting device PBS1, 11 via its second surface 11-2 thereof. Because of its p-polarized polarization state said first secondary illumination light component L2r is transmitted by the polarization selective interface 11c of said first polarization selective or polarizing beam splitting device PBS1, 11 in order to hit the third surface 11-3 thereof to leave the same in order to interact as light for said first partial image Ir to be generated with a first image generating means/unit P1 for said first partial image Ir, which is provided in the neighbourhood or vicinity of said first surface 11-3.

Upon interaction of the second primary illumination light component L1g, SP2 with said wavelength selective optical element WSOE between the second surface 11-2 and the first surface 12-1 of said first polarization selective or polarizing beam splitting device PBS1, 11 and said second polarization selective or polarizing beam splitting device PBS2, 12, respectively, the polarization state of said second primary illumination light component L1g, SP2 is changed to a p-polarized polarization state, thereby generating a second secondary illumination light component L2g as light for said second partial image Ig to be generated. Said second secondary illumination light component L2g is because of its p-polarized polarization state directly transmitted from said first interface 12-1 to said second surface 12-2 of said second polarization selective or polarizing beam splitting device PBS2, 12 via its polarization selecting interface 12c in order to leave said second polarization selective or polarizing beam splitting device PBS2, 12 via its second surface 12-2 and in order to interact with a second image generating means/unit P2 for said second partial image Ig, which is provided in the neighbourhood or vicinity of said second surface 12-2 of said second polarization selective or polarizing beam splitting device PBS2, 12.

Upon interaction of said third primary illumination light component L1b, SP3 with said wavelength selective optical element WSOE between said second surface 11-2 and said first surface 12-1 of said first polarization selective or polarizing beam splitting device PBS1, 11 and said second polarization selective or polarizing beam splitting device PBS2, 12, respectively, said third primary illumination light component L1b, SP3 obtains a s-polarized polarization state to thereby form a third secondary illumination light component L2b as light for said third partial image Ib to be generated. Because of its s-polarized polarization state said third secondary illumination light component L2b is reflected by said polarization selecting interface 12c of said second polarization selective or polarizing beam splitting device PBS2, 12 directly from said first surface 12-1 to said third surface 12-3 of said second polarization selective or polarizing beam splitting device PBS2, 12 in order to leave said second polarization selective or polarizing beam splitting device PBS2, 12 via its third surface 11-3 and in order to interact with a third image generating means/device P3 for said third partial image Ib to be generated.

Upon interaction of said first, second and third secondary illumination light components L2r, L2g, and L2b, respectively, as light for said first, second, and third partial images Ir, Ig, Ib, respectively, to be generated, first, second, and third tertiary illumination light components L3r, L3g, and L3b as light of said first, second, and third partial images Ir, Ig, and Ib are generated having a s-polarized polarization state, a s-polarized polarization state, and a p-polarized polarization state, respectively. These tertiary illumination light components L3r, L3g, and L3b re-enter the respective first and second polarization selective or polarizing beam splitting devices PBS1, 11; PBS2, 12 via its respective third surface 11-3, second surface 12-2, and third surface 12-3, respectively. Upon further interaction with respective polarization selecting interfaces 11c and 12c, respectively, these first tertiary illumination light components L3r, L3g, and L3b, respectively, are reflected, reflected and transmitted from the third surface 11-3 to the fourth surface 11-4 of said first polarization selective or polarizing beam splitting device PBS1, 11, from said second surface 12-2 to said fourth surface 12-3 of said second polarization selective or polarizing beam splitting device PBS2, 12, and from said third surface 12-3 to said fourth surface 12-4 of said second polarization selective or polarizing beam splitting device PBS2, 12, respectively, in order to leave the respective polarization selective beam splitting devices PBS1, 11; PBS2, 12 and in order to enter the optical projection unit OP, which is provided in the vicinity or neighbourhood of said fourth surfaces 11-4 and 12-4 or in an optical path thereof.

Fig. 2A demonstrates the basic architecture of this embodiment, whereas Figs. 2B and 2C demonstrate the ON state and the OFF state, respectively, of the first, second and third image generating means or devices P1, P2 and P3, respectively, which are in the case of Figs. 2A to 2C reflective imaging panels. Fig. 2C also indicates the off light or lost waste light components SP1', SP2', and SP3' with the respective components L3r', L3g', L3b'.

Fig. 3 shows an embodiment which is similar to that of Figs. 2A to 2C but now additionally illustrates the provided illumination unit which is arranged and adapted in order to provide the primary illumination light L1.

In Fig. 4 a possible embodiment for the wavelength selective optical element WSOE is indicated as already described above.

Fig. 5 illustrates the provision of several blocking mechanisms to further enhance the functionality and the reliability of the inventive projector arrangement as already mentioned above.

Fig. 6A, 6B, and 7 elucidate further embodiments of the inventive arrangement having different architectures for the optical projection unit OP.

### Reference Symbols

- **10**: projector arrangement according to the present invention
- **11**: first polarization selective or polarizing beam splitting device
- **11-1**: first surface
- **11-2**: second surface
- **11-3**: third surface
- **11-4**: fourth surface
- **11c**: polarization selective interface
- **12**: second polarization selective or polarizing beam splitting device
- **12-1**: first surface
- **12-2**: second surface
- **12-3**: third surface
- **12-4**: fourth surface
- **12c**: polarization selective interface
- **100**: prior art projector arrangement

- **A**: analyser
- **D**: dichroic layer
- **DM**: dichroic mirror prism
- **FLB**: front lens block
- **FM1**: folding mirror
- **FM2**: folding mirror
- **FM3**: folding mirror
- **Ir**: first partial image
- **Ig**: second partial image
- **Ib**: third partial image
- **L1**: primary illumination light
- **L1r**: first primary illumination light component
- **L1g**: second primary illumination light component
- **L1b**: third primary illumination light component
- **L2**: secondary illumination light
- **L2r**: first secondary illumination light component
- **L2g**: second secondary illumination light component
- **L2b**: third secondary illumination light component
- **L3**: tertiary illumination light
- **L3r**: first tertiary illumination light component
- **L3r'**: off light or waste light of first tertiary illumination light component
- **L3g**: second tertiary illumination light component
- **L3g'**: off light or waste light of second tertiary illumination light component
- **L3b**: third tertiary illumination light component
- **L3b'**: off light or waste light of third tertiary illumination light component
- **LB 1**: lens block
- **LB2**: lens block
- **OP**: optical projection unit
- **P1**: first image generating/generations means, unit, device
- **P2**: second image generating/ generations means, unit, device
- **P3**: third image generating/generations means, unit, device
- **PBS1**: first polarization selective or polarizing beam splitting device
- **PBS2**: second polarization selective or polarizing beam splitting device
- **PBS1'**: first polarization selective or polarizing beam splitting device of prior art
- **PBS2'**: second polarization selective or polarizing beam splitting device of prior art
- **PBS3'**: third polarization selective or polarizing beam splitting device of prior art
- **PBS4**': fourth polarization selective or polarizing beam splitting device of prior art
- **PL1**: projection lens, projection optics
- **PL2**: projection lens, projection optics
- **Q1**: quarter wave retarder
- **Q2**: quarter wave retarder
- **R**: wavelength selective retarder
- **S**: substrate
- **SP1**: first spectral component
- **SP1'**: off light or waste light of first spectral component
- **SP2**: second spectral component
- **SP2'**: off light or waste light of second spectral component
- **SP3**: third spectral component
- **SP3'**: off light or waste light of third spectral component
- **SSR**: spectral splitting and recombination unit
- **w**: white light
- **X**: X cube, colour cube
- **WSOE**: wavelength selective optical element
- **WSP**: wavelength selective polarizer

## Claims

1. Projector arrangement, comprising
- a first, a second, and a third image generation or generating means (P1, P2, P3),
- a spectral splitting and recombination unit (SSR), and
- an optical projection unit (OP) which is adapted and/or arranged in order:
- wherein said first, said second, and said third image generation means (P1, P2, P3) are adapted and/or arranged in order to generate a first, a second, and a third partial image (I1, I2, I3), respectively,
- wherein said spectral splitting and recombination unit (SSR) is adapted and/or arranged in order to receive primary illumination light (L1),
- wherein said spectral splitting and recombination unit (SSR) comprises a first and a second polarization selective or polarizing beam splitting device (11, PBS1; 12, PBS2),
- wherein said spectral splitting and recombination unit (SSR) and in particular said first polarization selective or polarizing beam splitting device (11, PBS1) are adapted and/or arranged in order to receive said primary illumination light (L1) or first, second, and third primary illumination light components (L1r, L1g, L1b) thereof through a single and common face (11-1) of said first polarization selective or polarizing beam splitting device (11, PBS1) and in particular through a first face (11-1) thereof,
- wherein a wavelength selective optical element (WSOE) is provided between said first polarization selective or polarizing beam splitting device (11, PBS1) and said second polarization selective or polarizing beam splitting device (12, PBS2) and in particular between a second surface (11-2) of said first polarization selective or polarizing beam splitting device (11, PBS1) and a first surface (12-1) of said second polarization selective or polarizing beam splitting device (12, PBS2) and/or in an connected optical path between these entities,
- wherein said wavelength selective optical element (WSOE) is adapted and/or arranged:
- in order to receive said first primary illumination light component (L1r) - in particular in a first or s-polarized polarization state - or a derivative thereof and to essentially reflect said first primary illumination light component (L1r) - in particular thereby changing said first or s-polarized polarization state into a second or p-polarized polarization state,
- in order to receive said second primary illumination light component (L1g) - in particular in said first or s-polarized polarization state - or a derivative thereof and to essentially transmit said second primary illumination light component (L1g) - in particular thereby changing said first or s-polarized polarization state into said second or p-polarized polarization state, and
- in order to receive said third primary illumination light component (L1b) - in particular in said first or s-polarized polarization state - or a derivative thereof and to essentially transmit said third primary illumination light component (L1b) - in particular thereby leaving said first or s-polarized polarization state unchanged, and
- wherein the main and/or the entire functionality of said spectral splitting and recombination unit (SSR) is essentially completely realized by said first, said second polarization selective or polarizing beam splitting device (11, PBS1; 12, PBS2) and said wavelength selective optical element (WSOE).

2. Projector arrangement according to claim 1,
wherein said wavelength selective optical element (WSOE) comprises a first quarter wave layer (Q1), a dichroic layer (D), a second quarter wave layer (Q2), and a wavelength dependent retarder layer (R) in particular in this order from first polarization selective or polarizing beam splitting device (11, PBS1) to said second polarization selective or polarizing beam splitting device (12, PBS2) and/or on the basis of an underlying transparent substrate (S).

3. Projector arrangement according to any one of the preceding claims
wherein said spectral splitting and recombination unit (SSR) is adapted and/or arranged in order:
- to receive primary illumination light (L1) comprising first, second, and third - in particular essentially spectrally disjunct and/or complemental - spectral primary illumination light components (L1r, L1g, L1b),
- to spectrally split said primary illumination light (L1) into its first, second, and third primary illumination light components (L1r, L1g, L1b) or derivatives thereof serving as secondary illumination light components (L2r, L2g, L2b) and as light for said first, second, and third partial images (Ir, Ig, Ib) to be generated,
- to direct said first, second, and third secondary illumination light components (L2r, L2g, L2b) to said first, second, and third image generation means (P1, P2, P3),
- to receive light from said first, second, and third image generation means (P1, P2, P3) as first, second, and third tertiary illumination light components (L3r, L3g, L3b) as light of said generated first, second, and third partial images (I1, I2, I3), respectively, and
- to at least partly recombine and direct said first, second, and third tertiary illumination light components (L3r, L3g, L3b) to said optical projection unit (OP).

4. Projector arrangement according to any one of the preceding claims
wherein said spectral splitting and recombination unit (SSR) is adapted and/or arranged in order:
wherein said optical projection unit (OP) is adapted and/or arranged in order:
- to receive said tertiary illumination light components (L3r, L3g, L3b) or a derivative or combination thereof from said spectral splitting and recombination unit (SSR), and
- to output and project said tertiary illumination light components (L3r, L3g, L3b) or a derivative or combination thereof to thereby image and project a combination of said first, second, and third partial images (Ir, Ig, Ib) as an image (I) to be displayed

5. Projector arrangement according to any one of the preceding claims,
wherein said first polarization selective or polarizing beam splitting device (11, PBS1) is adapted and/or arranged for receiving said primary illumination light (L1), its first, second, and third spectral primary illumination light components (L1r, L1g, L1b; SP1, SP2, SP3) and/or a derivative thereof in particular in a first or s-polarized polarization state.

6. Projector arrangement according to any one of the preceding claims,
wherein said first polarization selective or polarizing beam splitting device (11, PBS1) comprises a first surface (11-1) being adapted and/or arranged for having said primary illumination light (L1), its first, second, and third spectral primary illumination light components (L1r, L1g, L1b; SP1, SP2, SP3) and/or a derivative thereof - in particular of said first or s-polarized polarization state - entered said first polarization selective or polarizing beam splitting device (11, PBS1).

7. Projector arrangement according to any one of the preceding claims,
wherein said first polarization selective or polarizing beam splitting device (11, PBS1) comprises a second surface (11-2) being adapted and/or arranged for having said primary illumination light (L1), its first, second, and third spectral primary illumination light components (L1r, L1g, L1b; SP1, SP2, SP3) and/or a derivative thereof - in particular of said first or s-polarized polarization state - left said first polarization selective or polarizing beam splitting device (11, PBS1) in particular to have said primary illumination light (L1), its first, second, and third spectral primary illumination light components (L1r, L1g, L1b; SP1, SP2, SP3) and/or a derivative thereof interact with a provided wavelength selective optical element (WSOE) in particular in order to generate said secondary illumination light components (L2r, L2g, L2b; SP1, SP2, SP3) of said secondary illumination light (L2) as light for said first, second, and third partial images (Ir, Ig, Ib) to be generated.

8. Projector arrangement according to claim 7,
wherein said second surface (11-2) of said first polarization selective or polarizing beam splitting device (11, PBS1) is adapted and/or arranged for having said first spectral primary illumination light component (L1r, SP1) of said primary illumination light (L1) and/or a derivative thereof - in particular in a second or p-polarized polarization state - re-entered said first polarization selective or polarizing beam splitting device (11, PBS1) as said first secondary illumination light component (L2r, SP1) of said secondary illumination light (L2) as light for said first partial image (Ir) in particular after interaction with said provided wavelength selective optical element (WSOE).

9. Projector arrangement according to any one of the preceding claims,
wherein said first polarization selective or polarizing beam splitting device (11, PBS1) comprises a third surface (11-3) being adapted and/or arranged for having said first secondary illumination light component (L2r, SP1) of said secondary illumination light (L2) and/or a derivative thereof - in particular in a second or p-polarized polarization state - left said first polarization selective or polarizing beam splitting device (11, PBS1) as light for said first partial image (Ir) in particular to have said first secondary illumination light component (L2r, SP1) of said secondary illumination light (L2) and/or said derivative thereof interact with said first image generating means (P1) for said first partial image (Ir) in order to generate said first partial image (Ir) and said first tertiary illumination light component (L3r, SP1) of said tertiary illumination light (L3) as light of said first partial image (Ir) in particular in said first or s-polarized polarization state.

10. Projector arrangement according to any one of the preceding claims,
wherein said first polarization selective or polarizing beam splitting device (11, PBS1) comprises a fourth surface (11-4) being adapted and/or arranged for having said first tertiary illumination light component (L3r, SP1) of said tertiary illumination light (L3) and/or a derivative thereof as light of said first partial image (Ir) - in particular of said first or s-polarized polarization state - left said first polarizing beam splitting device (11, PBS1) in particular to direct said first tertiary illumination light component (L3r, SP1) of tertiary illumination light (L3) and/or said derivative thereof as light of said first partial image (Ir) to said optical projection unit (OP).

11. Projector arrangement according to any one of the preceding claims,
wherein said first polarization selective or polarizing beam splitting device (11, PBS1) comprises a polarization selecting or selective interface (11c) being adapted and/or arranged in order to essentially reflect light of said first or s-polarized polarization state and to essentially transmit light of said second or p-polarized polarization state.

12. Projector arrangement according to claim 11,
wherein said polarization selecting or selective interface (11c) of said first polarization selective or polarizing beam splitting device (11, PBS1) is adapted and/or arranged in order to essentially reflect and redirect said primary illumination light (L1), its first, second, and third spectral primary illumination light components (L1r, L1g, L1b; SP1, SP2, SP3) and/or a derivative thereof - in particular of said first or s-polarized polarization state - from said first surface (11-1) of said first polarization selective or polarizing beam splitting device (11, PBS1) to said second surface (11-2) of said first polarization selective or polarizing beam splitting device (11, PBS1).

13. Projector arrangement according to any one of the preceding claims 11 or 12,
wherein said polarization selecting or selective interface (11c) of said first polarization selective or polarizing beam splitting device (11, PBS1) is adapted and/or arranged in order to essentially transmit said first secondary illumination light component (L2r, SP1) of secondary illumination light (L2) and/or said derivative thereof as light for said first partial image (Ir) - in particular of said second or p-polarized polarization state - from said second surface (11-2) of said first polarization selective or polarizing beam splitting device (11, PBS1) to said third surface (11-3) of said first polarization selective or polarizing beam splitting device (11, PBS1).

14. Projector arrangement according to any one of the preceding claims11 to 13,
wherein said polarization selecting or selective interface (11c) of said first polarization selective or polarizing beam splitting device (11, PBS1) is adapted and/or arranged to essentially reflect said first tertiary illumination light component (L3r, SP1) of tertiary illumination light (L3) and/or a derivative thereof as light of said first partial image (Ir) - in particular of said first or s-polarized polarization state - from said third surface (11-3) of said first polarization selective or polarizing beam splitting device (11, PBS1) to said fourth surface (11-4) of said first polarization selective or polarizing beam splitting device (11, PBS1).

15. Projector arrangement according to any one of the preceding claims,
wherein said second polarization selective or polarizing beam splitting device (12, PBS2) is adapted and/or arranged for receiving said second and third secondary illumination light components (L2g, L2b; SP2, SP3) of said secondary illumination light (L2) and/or a derivative thereof as light for said second and said third partial images (Ig, Ib) to be generated - in particular in said second or p-polarized polarization state or in said first or s-polarized polarization state, respectively - from said first polarization selective or polarizing beam splitting device (11, PBS1), from the second surface (11-2) thereof and/or from said provided wavelength selective optical element (WSOE) in particular after interaction with said provided wavelength selective optical element (WSOE).

16. Projector arrangement according to any one of the preceding claims,
wherein said second polarization selective or polarizing beam splitting device (12, PBS2) comprises a first surface (12-1) being adapted and/or arranged for having said second and third primary illumination light components (L1g, L1b; SP2, SP3) of said primary illumination light (L1), said second and third secondary illumination light components (L2g, L2b; SP2, SP3) of said secondary illumination light (L2) and/or a derivative thereof - in particular in said second or p-polarized polarization state or in said first or s-polarized polarization state, respectively - entered said second polarization selective or polarizing beam splitting device (12, PBS2) as light for said second and said third partial images (Ig, Ib), respectively, to be generated - in particular from said first polarization selective or polarizing beam splitting device (11, PBS1), from the second surface (11-2) thereof and/or from said provided wavelength selective optical element (WSOE) in particular after interaction with said provided wavelength selective optical element (WSOE).

17. Projector arrangement according to any one of the preceding claims,
wherein said second polarization selective or polarizing beam splitting device (12, PBS2) comprises a second surface (12-2) being adapted and/or arranged for having said second secondary illumination light component (L2g, SP2) of said secondary illumination light (L2) and/or a derivative thereof - in particular in said second or p-polarized polarization state - left said second polarization selective or polarizing beam splitting device (12, PBS2) as light for said second partial image (Ig) to be generated in particular to have said second secondary illumination light component (L2g, SP2) of said secondary illumination light (L2) and/or a derivative thereof interact with said second image generating means (P2) for said second partial image (Ig) in order to generate said second partial image (Ig) and said second tertiary illumination light component (L3g, SP2) of tertiary illumination light (L3) as light of said second partial image (Ig) in particular in said first or s-polarized polarization state.

18. Projector arrangement according to claim 17,
wherein said second surface (12-2) of said second polarization selective or polarizing beam splitting device (12, PBS2) is adapted and/or arranged for having said second tertiary illumination light component (L3g, SP2) of tertiary illumination light (L3) and/or a derivative thereof - in particular in said first or s-polarized polarization state - re-entered said second polarization selective or polarizing beam splitting device (12, PBS2) as light of said second partial image (Ig).

19. Projector arrangement according to any one of the preceding claims,
wherein said second polarization selective or polarizing beam splitting device (12, PBS2) comprises a third surface (12-3) being adapted and/or arranged for having said third secondary illumination light component (L2b, SP3) of said secondary illumination light (L2) and/or a derivative thereof - in particular in said first or s-polarized polarization state - left said second polarization selective or polarizing beam splitting device (12, PBS2) as light for said third partial image (Ib) to be generated in particular to have said third secondary illumination light component (L2b, SP3) of said secondary illumination light (L2) and/or a derivative thereof interact with said third image generating means (P3) for said third partial image (Ib) in order to generate said third partial image (Ib) and said third tertiary illumination light component (L3b, SP3) of tertiary illumination light (L3) as light of said third partial image (Ib) in particular in said second or p-polarized polarization state.

20. Projector arrangement according to claim 19,
wherein said third surface (12-3) of said second polarization selective or polarizing beam splitting device (12, PBS2) is adapted and/or arranged for having said third tertiary illumination light component (L3b, SP3) of tertiary illumination light (L3) and/or a derivative thereof - in particular in said second or p-polarized polarization state - re-entered said second polarization selective or polarizing beam splitting device (12, PBS2) as light of said third partial image (Ib).

21. Projector arrangement according to any one of the preceding claims,
wherein said second polarization selective or polarizing beam splitting device (12, PBS2) comprises a fourth surface (12-4) being adapted and/or arranged:
- for having said second tertiary illumination light component (L3g, SP2) of tertiary illumination light (L3) and/or a derivative thereof as light of said second partial image (Ig) - in particular of said first or s-polarized polarization state - left said second polarization selective or polarizing beam splitting device (12, PBS2) in particular to direct said second tertiary illumination light component (L3g, SP2) of tertiary illumination light (L3) and/or a derivative thereof as light of said second partial image (Ig) to said optical projection unit (OP), and/or
- for having said third tertiary illumination light component (L3b, SP3) of tertiary illumination light (L3) and/or a derivative thereof as light of said third partial image (Ib) - in particular of said second or p-polarized polarization state - left said second polarization selective or polarizing beam splitting device (12, PBS2) in particular to direct said third tertiary illumination light component (L3b, SP3) of tertiary illumination light (L3) and/or a derivative thereof as light of said third partial image (Ib) to said optical projection unit (OP).

22. Projector arrangement according to any one of the preceding claims,
wherein said second polarization selective or polarizing beam splitting device (12, PBS2) comprises a polarization selecting or selective interface (12c) being adapted and/or arranged to essentially reflect light of said first or s-polarized polarization state and to essentially transmit light of said second or p-polarized polarization state.

23. Projector arrangement according to claim 22,
wherein said polarization selecting or selective interface (12c) of said second polarization selective or polarizing beam splitting device (12, PBS2) is adapted and/or arranged:
- in order to essentially reflect and redirect said third secondary illumination light component (L2b, SP3) of said secondary illumination light (L2) and/or a derivative thereof - in particular in said first or s-polarized polarization state - as light for said third partial image (Ib) to be generated from said first surface (12-1) of said second polarization selective or polarizing beam splitting device (12, PBS2) to said third surface (12-3) of said second polarization selective or polarizing beam splitting device (12, PBS2), and/or
- in order to essentially reflect and redirect said second tertiary illumination light component (L3g; SP2) of said tertiary illumination light (L3) and/or a derivative thereof - in particular in said first or s-polarized polarization state - as light of said second partial image (Ig) generated from said second surface (12-2) of said second polarization selective or polarizing beam splitting device (12, PBS2) to said fourth surface (12-4) of said second polarization selective or polarizing beam splitting device (12, PBS2).

24. Projector arrangement according to any one of the preceding claims 22 or 23,
wherein said polarization selecting or selective interface (12c) of said second polarization selective or polarizing beam splitting device (12, PBS2) is adapted and/or arranged:
- in order to essentially transmit said third tertiary illumination light component (L3b; SP3) of said tertiary illumination light (L3) and/or a derivative thereof - in particular in said second or p-polarized polarization state - as light of said third partial image (Ib) generated from said third surface (12-3) of said second polarization selective or polarizing beam splitting device (12, PBS2) to said fourth surface (12-4) of said second polarization selective or polarizing beam splitting device (12, PBS2), and/or
- in order to essentially transmit said second secondary illumination light component (L2g, SP2) of said secondary illumination light (L2) and/or a derivative thereof - in particular in said second or p-polarized polarization state
- as light for said second partial image (Ig) to be generated from said first surface (12-1) of said second polarization selective or polarizing beam splitting device (12, PBS2) to said second surface (12-2) of said second polarization selective or polarizing beam splitting device (12, PBS2).

25. Projector arrangement according to any one of the preceding claims,
wherein said first polarization selective or polarizing beam splitting device (11, PBS1) and said second polarization selective or polarizing beam splitting device (12, PBS2) are adapted and/or arranged in order to have said second surface (11-2) of said first polarization selective or polarizing beam splitting device (11, PBS1) and said first surface (12-1) of said second polarization selective or polarizing beam splitting device (12, PBS2) essentially facing each other and/or in the vicinity to each other and/or to have a connected optical path between them.

26. Projector arrangement according to any one of the preceding claims,
wherein said spectral splitting and recombination unit (SSR) comprises a wavelength selective polarizer (WSP), which is adapted and/or arranged adjacent or in the vicinity of said fourth surface (12-4) of said second polarization selective or polarizing beam splitting device (12, PBS2):
- in order to transmit said third tertiary illumination light component (L3b, SP3) in said second or p polarized polarization state,
- in order to transmit said second tertiary illumination light component (L3g, SP2) in said first or s polarized polarization state, and
- in order to block, reflect and/or absorb said off-light or waste light component (L3g', SP2') in said second or p polarized polarization state.

27. Projector arrangement according to any one of the preceding claims,
wherein said spectral splitting and recombination unit (SSR) comprises an analyser (A), which is adapted and/or arranged adjacent or in the vicinity of said fourth surface (11-4) of said first polarization selective or polarizing beam splitting device (11. PBS1):
- in order to transmit said first tertiary illumination light component (L3r, SP1) in said first or s polarized polarization state and
- in order to block, reflect and/or absorb said off-light or waste light component (L3r', SP1') in said second or p polarized polarization state.
